# EUROPÄISCHE PATENTSCHRIFT

(11) **EP 2 264 422 B1**
(45) Veröffentlichungstag und Bekanntmachung des Hinweises auf die Patenterteilung: **09.09.2015**
(21) Anmeldenummer: 10164599.2
(22) Anmeldetag: 01.06.2010
(51) Int. Cl.: G01M 13/02, G01M 15/02, G01M 15/04

(54) **Prüfstandsanordnung**
Test facility assembly
Agencement de banc d'essai

(30) Priorität: 16.06.2009 AT 36909 U
(43) Veröffentlichungstag der Anmeldung: 22.12.2010
(73) Patentinhaber: AVL List GmbH, 8020 Graz (AT)
(72) Erfinder: Mayrhofer, DI Josef, 8010, Graz (AT); Kokal, DI Helmut, 8503, St. Josef (AT); Dragaschnig, DI Stefan, 8045, Graz (AT); Schmidt, Joachim, 8402, Werndorf (AT); Hochmann, Gerald, 8054, Graz (AT); Denger, Dirk, 8020, Graz (AT); Schmidt, Martin, 63225, Langen (DE)
(74) Vertreter: Patentanwälte Pinter & Weiss OG

(56) Entgegenhaltungen:
- AT-U2- 9 782
- US-A1- 2002 091 471

## Beschreibung

Die Erfindung betrifft eine Prüfstandsanordnung mit einem Prüfling, welcher durch eine Verbindungswelle mit Adapterflansch und Drehmomentmessflansch mit einer Elektromaschine für Antrieb und/oder Belastung des Prüflings verbunden ist, sowie mit einer Regelungsanordnung für die Elektromaschine für Antrieb und/oder Belastung des Prüflings, wobei die Anordnung aus Verbindungswelle und Antriebs- und Belastungsmaschine ein konstantes, vorgegebenes Trägheitsmoment aufweist.

Steigende Kraftstoffpreise und gesetzliche Vorgaben in Bezug auf Emission und 002, in Kombination mit hohen Kundenerwartungen bzgl. Komfort, führt zu einem stetig wachsenden Bedarf in Hinblick auf kostenoptimierte Fahrzeuge mit hoch innovativen Antriebsträngen. Aus diesem Grund sind die Fahrzeughersteller mit der Herausforderung konfrontiert, hoch komplexe Antriebstranglösungen schnell und zielgerichtet zu entwickeln. Um diesen Herausforderungen gerecht zu werden, sind diverse Strategien entwickelt worden wobei sich das "Front Loading" des Entwicklungsprozesses, auf Basis des "Road-to-Lab-Math" Strategieansatzes, als Kernstrategie herauskristallisiert hat. Hier sollen Entwicklungsaufgäben, welche früher nur in teuren Prototypenumgebungen bearbeitet werden konnten, in frühe Prozessphasen transferiert werden, wie beispielsweise in Gschweitl K., Ellinger R., Loibner E.: "Werkzeuge und Methoden im Hybrid Entwicklungsprozess", 19. "Motor und Umwelt"-Konferenz, Graz 2007, in Schyr C., Gschweitl K.: "Methodische Validierung von hybriden Antriebsträngen". 2. Internationales Symposium für Entwicklungsmethodik, Darmstadt, 2007 oder in Beidl C., Rainer G., Schoeggl P., Martini E., Dener D.: "Enabling Future Powertrain Solutions by Innovative Simulation & Testing Toolchains". 32nd FISITA World Automaotive Congress, Munich, 2008, beschrieben ist. Die Prototypenumgebungen sollen durch Simulationsumgebungen ersetzt werden. Diese Strategie setzt aber voraus, dass dem Entwickler durchgängige Entwicklungsumgebungen zur Verfügung stehen, in denen er das Gesamtsystemverhalten Fahrzeug aber auch dessen Interaktion mit der Umgebung berücksichtigen kann.

Um etwa Themen wie Fahrbarkeitskalibration qualitativ hochwertig auf den Motorenprüfstand verlagern zu können, muss man in der Lage sein Effekte abzubilden, die für den späteren Kundenkomfort relevant sind. Ein herkömmlicher Motorprüfstand für einen Verbrennungsmotor, der über eine Verbindungswelle mit einer Antriebs- und Belastungsmaschine verbunden ist, ist beispielsweise aus der AT 9 782 U2 bekannt. Aktuelle Prüfstandsysteme können derartige Antriebstrangsimulationen nur bis ca. 8-10Hz abbilden, was sich jedoch als nicht ausreichend herausgestellt hat. Die US 2002/0091471 A1 zeigt einen Motorprüfstand mit Verbrennungsmotor, Verbindungswelle und einer Antriebs- und Belastungsmaschine, deren Eigenfrequenz über 100Hz gelegt ist. Um Tests mit dieser Prüfstandsanordnung durchführen zu können ist eine Resonanzsteuereinheit vorgesehen, die Resonanz während des Tests unterdrückt.

Es war daher die Aufgabe der vorliegenden Erfindung, eine Prüfstandsanordnung anzugeben, insbesondere einen Motorenprüfstand, der unter Vermeidung der oben deutlich gewordenen Nachteile die Verbindung der Antriebstrang- und Fahrzeugsimulation mit dem realen fahrzeugspezifischen Verbrennungs- und Instationärverhaltens des Motors herstellen kann. Insbesondere sollte, was bislang nicht möglich war, die zyklische Ungleichförmigkeit des Verbrennungsmotors detailgetreu darstellbar sein und angeregte Frequenzen aus der Antriebstrangsimulation, bis zu 40Hz, auf den Verbrennungsmotor übertragen werden können.

Zur Lösung dieser Aufgabe ist erfindungsgemäß vorgesehen, dass die Masse und das Trägheitsmoment des Adapterflansches derart gewählt ist, dass die Eigenfrequenz des Systems aus Prüfling, Adapterflansch, Verbindungswelle und Eektromaschine für Antrieb und/oder Belastung des Prüflings zwischen der Leerlauffrequenz und einer Teillastfrequenz des Prüflings liegt. Durch diese Systemauslegung sind nun beispielsweise die realistische Darstellung von "echten" Verbrennungsstößen mit Aussetzern oder der hybridrelevante Start/Stopp-Betrieb in Kombination mit hochentwickelter Fahrzeugsimulation auch am Prüfstand umsetzbar. Damit ist diese Prüfstandkonfiguration hervorragend für Arbeiten im Motor-& Antriebstrangbereich, die eine hohe Korrelation zum realen instationären Fahrzeugverhal-_ ten aufweisen müssen, geeignet.

Ein besonders wichtiges Thema ist die Darstellung von Triebstrangschwingungen bis 40Hz mit der Möglichkeit der sicheren und genauen Ausregelung des mechanischen Schwingsystems Motor - Welle - Belastungseinheit in diesem Frequenzbereich, d.h. bei einer im Motorenbetriebsbereich liegenden mechanischen Eigenfrequenz des Prüfstandaufbaues. Gemäß einem vorteilhaften Ausführungsbeispiel der Erfindung ist daher vorgesehen, dass das Trägheitsmoment des Adapterflansches derart gewählt wird, dass die Eigenfrequenz des Systems zwischen 10 Hz und 100 Hz liegt, vorzugsweise zwischen 20 Hz und 60 Hz.

Vorteilhafterweise ist die Verbindungswelle als Geichlaufgelenkwelle ausgeführt.

Um die realen, instationären Rückwirkungen im Fahrzeugverhalten simulatorisch gut nachbilden zu können, ist eine Belastungseinheit notwendig, die sich durch niedrigste Eigenschwungmasse und hohe Verstellgeschwindigkeiten auszeichnet. Daher ist ein weiteres Ausführüngsbeispiel der Erfindung dadurch gekennzeichnet, dass die Elektromaschine für Antrieb und/oder Belastung des Prüflings ein möglichst geringes Trägheitsmoment aufweist.

Vorteilhafterweise ist zusätzlich auch vorgesehen, dass die Elektromaschine für Antrieb und/oder Belastung des Prüflings ein möglichst großes Verhältnis aus Drehmoment zu Trägheitsmoment aufweist. Die beiden genannten Merkmale sind dafür verantwortlich, dass die Elektromaschine für Antrieb und/oder Belastung des Prüflings hohe Beschleunigungsfähigkeit (Abbremsung) besitzt.

Gemäß einer besonders zweckmäßigen Ausgestaltung der Erfindung ist die Elektromaschine für Antrieb und/oder Belastung des Prüflings, insbesondere deren Rotor, für winkelsynchrone, stoßartige, hohe Drehmomentbelastungen vorbereitet.

Besonders gut können die oben genannten Anforderungen umgesetzt werden, wenn die Antriebs- und Belastungsmaschine als 3-Phasen-gespeiste Drehstrommaschine, vorzugsweise als Asynchronmaschine, fremderregte oder permanentmagneterregte Synchronmaschine, ausgeführt ist.

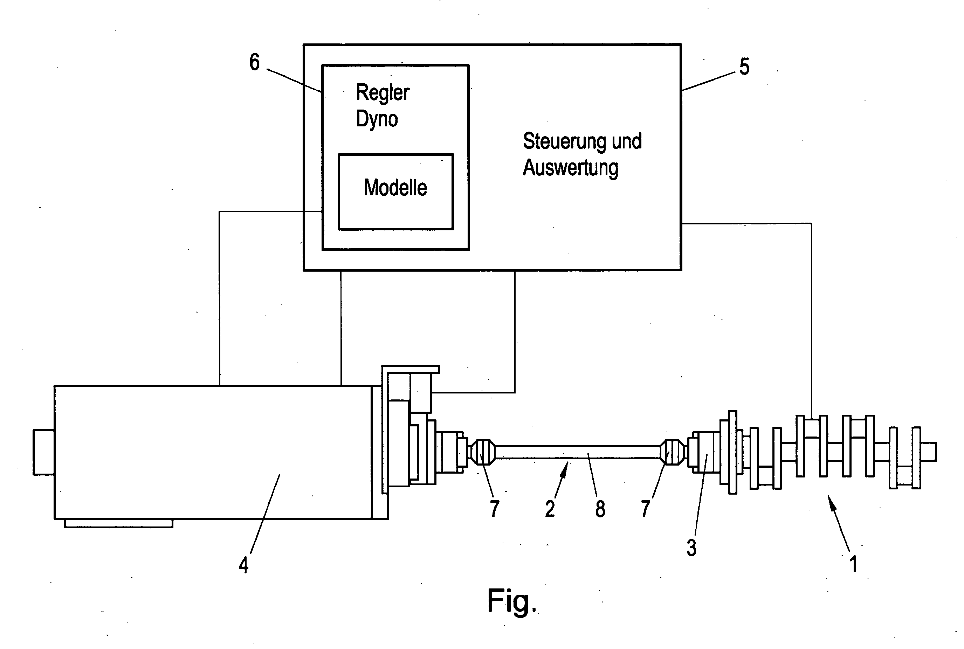

In der nachfolgenden Beschreibung soll die Erfindung anhand eines bevorzugten Ausführungsbeispiels und der beigefügten Zeichnung näher erläutert werden.

Die Zeichnungsfigur zeigt in schematischer Darstellung eine Prüfstandsanordnung, beispielsweise einen Motorenprüfstand, mit einer Verbrennungskraftmaschine als Prüfling 1, die durch deren Kurbelwelle symbolisiert ist. Dieser Prüfling 1 ist über eine Welle 2 und einen Adapterflansch 3 mit einer Elektromaschine 4 für Antrieb und/oder Belastung des Prüflings 1 verbunden. Die Steuer- und Auswerte-Einheit 5, welche auch Teile eines noch übergeordneten Prüfstandsautomatisierungssystems sein kann, umfasst auch eine Regelungsanordnung 6 für die Elektromaschine 4. Während der Prüfling 1 real aufgebaut ist, können daran anschließbare Komponenten durch Simulation ersetzt werden, wofür zumindest ein Modell für derartige, an den Prüfling 1 anschließbare Komponenten in der Regelungsanordnung 6 implementiert ist, aus welchem Modell dann die Regelanforderung an die Elektromaschine 4 ermittelt wird.

Die Anordnung aus Verbindungswelle 2 und Elektromaschine 4 weist ein konstantes, vorgegebenes Trägheitsmoment auf. Zusätzlich sind die Masse und das Trägheitsmoment des Adapterflansches 3 derart gewählt, dass die Eigenfrequenz des Systems aus Prüfling 1, Adapterflansch 3, Verbindungswelle 2 und Elektromaschine 4 zwischen der Leerlauffrequenz und einer Teillastfrequenz des Prüflings 1, d.h. vorzugsweise zwischen etwa 20 und 60Hz, liegt. In diesem Frequenzbereich ist eine realistische Darstellung von die zyklische Ungleichförmigkeit des Verbrennungsmotors als Prüfling 1 möglich, da angeregte Frequenzen aus der Antriebstrangsimulation oder anderen Modellen auf den Verbrennungsmotor übertragen werden können. Die Welle 2 wirkt dabei wie ein Tiefpass-Filter mit gegenüber bisherigen Aufbauten nach oben verschobener Tiefpass-Frequenz.

Vorteilhafterweise kann die sichere und genaue Ausregelung des mechanischen Schwingsystems Prüfling 1, Adapterflansch 3, Verbindungswelle 2 und Elektromaschine 4 in diesem Frequenzbereich, d.h. bei einer im Motorenbetriebsbereich liegenden mechanischen Eigenfrequenz des Prüfstandaufbaues, durch eine geeignete Regelungsstrategie unterstützt werden. Die Regelungsanordnung 6 umfasst dazu beispielsweise einen Regler und eine Istwertberechnungseinheit, die in einem Feedback-Zweig angeordnet ist. In der Istwertberechnungseinheit sind ein aktueller Istwert der Regelung und eine Vorhersage eines bevorstehenden, systemverzögerungsfreien Istwertes auf der Grundlage des Istwertes eines vorherigen Arbeitszyklus zu einem modifizierten Istwert verarbeitbar, der der Regelung rückgeführt wird.

Vorteilhafterweise ist die Verbindungswelle 2 als Gleichlaufgelenkwelle ausgeführt. Sie weist zwei Gleichlaufgelenke 7 an den Enden eines Stahlrohres 8 mit angepasster Steifigkeit und Momentenübertragungsfähigkeit auf. Aufgrund der Gleichlaufgelenke 7 ist die geometrische Ausrichtung von Prüfling 1 und Elektromaschine 4 nicht so kritisch und kann im Vergleich mit herkömmlich verwendeten Drehstäben sehr einfach durchgeführt werden. Auch ist ein und dieselbe Welle 2 für viele unterschiedliche Prüflinge 1 verwendbar, während bislang für jeden Prüfling 1 die Auslegung der Welle 2 neu berechnet und eine speziell abgestimmte Welle 2 verbaut werden musste.

Die Antriebs- und/oder Belastungseinheit 4 weist für die gute simulatorische Nachbildung der Rückwirkungen der am Prüfling 1 angeschlossenen Komponenten ein möglichst geringes Trägheitsmoment auf, ebenso wie vorzugsweise ein möglichst großes Verhältnis aus Drehmoment zu Trägheitsmoment. Die beiden genannten Merkmale gewährleisten die notwendige hohe Beschleunigungsfähigkeit (Abbremsung), welche durch den Wert "Umdrehungen pro Zeiteinheit pro Zeiteinheit" (rpm/sec) ausgedrückt, der vorteilhafterweise nicht unter 30.000 rpm/sec liegt und sich aus dem Nennmoment, der möglichen Überlast und der Trägheitsmasse der Maschine errechnet.

Gemäß einer besonders zweckmäßigen Ausgestaltung der Erfindung ist die Elektromaschine 4, insbesondere deren Rotor, für winkelsynchrone, stoßartige, hohe Drehmomentbelastungen vorbereitet. Auch Maßnahmen zur Vermeidung von Wirbelströmen und damit übermäßiger Hitzeentwicklung tragen dazu bei, insbesondere im Bereich de(r) Montageringe der Elektromaschine 4.

Besonders gut können die oben genannten Anforderungen umgesetzt werden, wenn die Elektromaschine 4 als 3-Phasen-gespeiste Drehstrommaschine, vorzugsweise als Asynchronmaschine, fremderregte oder permanentmagneterregte Synchronmaschine, ausgeführt ist.

Mit der erfindungsgemäßen Prüfstandsanordnung ist beispielsweise die realistische Abbildung der Drehungleichförmigkeit im gesamten Drehzahlband eines Verbrennungsmotors als Prüfling 1 möglich. Das ist die Basis für die Übertragung von SOP orientierten Entwicklungs- und Kalibrationsaufgaben vom Fahrzeug auf den Motorenprüfstand (z.B. Fahrbarkeit, OBD, Start/Stop, Nebenaggregatetriebentwicklung, Körperschallanalysen etc). Dies betrifft auch die Aussetzererkennung von Ottomotoren, bei welcher durch die erfindungsgemäße Prüfstandsanordnung jetzt das OBD relevante Drehungleichförmigkeitssignal wie im Fahrzeug erhalten werden kann, was bislang auf keinem Motorenprüfstand realisierbar war, da konventionelle Prüfstandsysteme, in Kombination mit konventioneller Regelung, dieses Verhalten glätten. Und das besonders bei Hybridantrieben wesentliche Verhalten von Mehrmassenschwungrädern kann simuliert werden, ohne auf die Verfügbarkeit von Prototypen angewiesen zu sein, welches durch die zum Motor hin verstärkte Drehungleichförmigkeit gekennzeichnet ist. Mit Hilfe der erfindungsgemäßen Merkmale können nun die Auswirkungen von Mehrmassenschwungrädern auf den Verbrennungsmotor systematisch und hocheffizient untersucht werden.

Ebenso müssen für Aufgaben wie die qualitativ hochwertig auf den Motorenprüfstand zu verlagernde Fahrbarkeitskalibration Effekte abgebildet werden können, die für den späteren Kundenkomfort relevant sind. Als Fahrbarkeit wird das subjektive Empfinden eines Fahrers bei Wechselwirkung mit einem Fahrzeug bezeichnet. Im Antriebsstrangentwicklungsprozess werden standardmäßig die Entwicklungsziele Fahrleistung, Verbrauch, Emissionen und Fahrbarkeit unterschieden. Die Abstimmung und Optimierung der jeweiligen Ziele erfolgt meist auf unterschiedlichen Plattformen: Fahrleistung und Verbrauch etwa am Antriebsstrangsprüfstand, jene von Verbrauch und Emissionen am Rollenprüfstand. Die Abstimmung der Fahrbarkeit wird praktisch ausschließlich im Fahrzeug, basierend auf subjektiven Bewertungen von Testfahrern, durchgeführt. Wird im Fahrzeug aber keine zufriedenstellende Fahrbarkeitsabstimmung erzielt, so sind Wiederholungsschleifen im Entwicklungsprozess nicht zu verhindern. Ein globales, gemeinsames Optimum kann auf Grund der getrennten Abstimmung der Entwicklungsziele nur erschwert gefunden werden.

Durch Einsatz von Methoden zur Simulation sowie zur objektiven Bewertung der Fahrbarkeit im Antriebsstrangentwicklungsprozess können obige Probleme umgangen werden. Durch die Integration am Motorenprüfstand können nun zahlreiche Abstimmungsaufgaben bereits früher im Entwicklungsprozess durchgeführt werden. Auch hier ist die erfindungsgemäße Abstimmung der Prüfstandsanordnung auf eine Eigenfrequenz des Systems zwischen 10 Hz und 100 Hz, vorzugsweise zwischen 20 Hz und 60 Hz, von Vorteil, da viele Fahrbarkeitsmanöver in diesem Bereich liegende Schwingungen hervorrufen. Beispielsweise erreichen Schwingungen des Fahrbarkeitsmanövers "Tip In" (positiver Lastschlag durch das Fahrpedal) bis zu 40Hz.

Auch gestattet die erfindungsgemäße Prüfstandsanordnung die zeit- und materialsparende Untersuchung von Fragen zur Auswirkung verschiedenster angeschlossener Komponenten durch die Simulation von deren Rückwirkung im genannten Frequenzbereich, etwa bei Starten und Stoppen, ohne Versuche mit einer Vielzahl von realen Komponenten durchführen zu müssen. Dabei sind keine teuren Versuchsfahrzeuge oder Komponentenprototypen notwendig, ist die Darstellung von Hardware-Änderungen oder Varianten in sehr kurzer Zeit möglich, können andere Bauteile schneller getauscht werden als in realen Fahrzeugen, sind die Tests sehr gut untereinander vergleichbar, da Entwicklungsumgebung immer konstant bleibt, und kann je nach Bedarf umfassendes Messequipment angewendet werden.

## Patentansprüche

1. Prüfstandsanordnung mit einem Prüfling (1), welcher durch eine Verbindungswelle (2) mit Adapterflansch (3) mit einer Elektromaschine (4) für Antrieb und/oder Belastung des Prüflings (1) verbunden ist, sowie mit einer Regelungsanordnung für die Elektromaschine (4) für Antrieb und/oder Belastung des Prüflings (1), wobei die Anordnung aus Verbindungswelle (2) und Antriebs- und Belastungsmaschine (4) ein konstantes, vorgegebenes Trägheitsmoment aufweist, **dadurch gekennzeichnet, dass** die Masse und das Trägheitsmoment des Adapterflansches (3) derart gewählt ist, dass die Eigenfrequenz des Systems aus Prüfling (1), Adapterflänsch (3), Verbindungswelle (2) und Elektromaschine (4) für Antrieb und/oder Belastung des Prüflings (1) zwischen der Leerlauffrequenz und einer Teillastfrequenz des Prüflings (1) liegt.

2. Prüfstandsanordnung nach Anspruch 1, **dadurch gekennzeichnet, dass** das Trägheitsmoment des Adapterflansches (3) derart gewählt wird, dass die Eigenfrequenz des Systems (1, 2, 3, 4) zwischen 10 Hz und 100 Hz liegt, vorzugsweise zwischen 20 Hz und 60 Hz.

3. Prüfstandsanordnung nach Anspruch 1 oder 2, **dadurch gekennzeichnet, dass** die Verbindungswelle (2) als Gleichlaufgelenkwelle ausgeführt ist.

4. Prüfstandsanordnung nach einem der Ansprüche 1 bis 3, **dadurch gekennzeichnet, dass** die Elektromaschine (4) für Antrieb und/oder Belastung des Prüflings (1) ein möglichst geringes Trägheitsmoment aufweist.

5. Prüfstandsanordnung nach Anspruch 4, **dadurch gekennzeichnet, dass** die Elektromaschine (4) für Antrieb und/oder Belastung des Prüflings (1) ein möglichst großes Verhältnis aus Drehmoment zu Trägheitsmoment aufweist.

6. Prüfstandsanordnung nach Anspruch 4 oder 5, **dadurch gekennzeichnet, dass** die Elektromaschine (4) für Antrieb und/oder Belastung des Prüflings (1), insbesondere deren Rotor, für winkelsynchrone, stoßartige, hohe Drehmomentbelastungen vorbereitet ist.

7. Prüfstandsanordnung nach einem der Ansprüche 4 bis 6, **dadurch gekennzeichnet, dass** die Antriebs- und Belastungsmaschine (4) als 3-Phasen-gespeiste Drehstrommaschine, vorzugsweise als Asynchronmaschine, fremderregte oder permanentmagneterregte Synchronmaschine, ausgeführt ist.

## Claims

1. A test stand arrangement with a test object (1) which is connected by means of a connecting shaft (2) having an adaptor flange (3) to an electric machine (4) for driving and/or loading the test object (1), and with a control arrangement for the electric machine (4) for driving and/or loading the test object (1), wherein the arrangement consisting of connecting shaft (2) and drive and load machine (4) has a constant, predetermined moment of inertia, **characterized in that** the mass and the moment of inertia of the adapter flange (3) are selected in such a manner that the resonant frequency of the system consisting of test object (1), adapter flange (3), connecting shaft (2) and electric machine (4) for driving and loading the test object (1) lies between the idle frequency and a partial load frequency of the test object (1).

2. The test stand arrangement according to claim 1, **characterized in that** the moment of inertia of the adapter flange (3) is selected in such a manner that the resonant frequency of the system (1, 2, 3, 4) lies between 10 Hz and 100 Hz, preferably between 20 Hz and 60 Hz.

3. The test stand arrangement according to claim 1 or 2, **characterized in that** the connecting shaft (2) is designed as synchronisation cardan shaft.

4. The test stand arrangement according to any one of the claims 1 to 3, **characterized in that** the electric machine (4) for driving and/or loading the test object (1) has a moment of inertia which is as low as possible.

5. The test stand arrangement according to claim 4, **characterized in that** the electric machine (4) for driving and loading the test object (1) has a ratio of torque to moment of inertia which is as high as possible.

6. The test stand arrangement according to claim 4 or claim 5, **characterized in that** the electric machine (4) for driving and/or loading the test object (1), in particular the rotor of the machine, is prepared for angle-synchronous, impulse-like, high torque loads.

7. The test stand arrangement according to any one of the claims 4 to 6, **characterized in that** the drive and load machine (4) is configured as three-phase machine, preferably as asynchronous machine, separately excited or permanent magnet-excited synchronous machine.

## Revendications

1. Agencement de banc d'essai avec un échantillon (1) relié à une machine électrique (4) par le biais d'un arbre de liaison (2) doté d'une bride d'adaptation (3), pour l'entraînement et/ou la charge de l'échantillon (1), et avec un système de régulation pour la machine électrique (4) pour l'entraînement et/ou la charge de l'échantillon (1), dans lequel l'ensemble constitué de l'arbre de liaison (2) et de la machine d'entraînement et de charge (4) présente un moment d'inertie constant prédéfini, **caractérisé en ce que** la masse et le moment d'inertie de la bride d'adaptation (3) sont sélectionnés de manière à ce que la fréquence propre du système comprenant l'échantillon (1), la bride d'adaptation (3), l'arbre de liaison (2) et la machine électrique (4) pour l'entraînement et/ou la charge de l'échantillon (1) est comprise entre la fréquence de marche à vide et une fréquence de charge partielle de l'échantillon (1).

2. Agencement de banc d'essai selon la revendication 1, **caractérisé en ce que** le moment d'inertie de la bride d'adaptation (3) est sélectionné de telle façon que la fréquence propre du système (1, 2, 3, 4) est comprise entre 10 Hz et 100 Hz, de préférence entre 20 Hz et 60 Hz.

3. Agencement de banc d'essai selon la revendication 1 ou 2, **caractérisé en ce que** l'arbre de liaison (2) est conçu comme un arbre à joint homocinétique.

4. Agencement de banc d'essai selon l'une des revendications 1 à 3, **caractérisé en ce que** la machine électrique (4) pour l'entraînement et/ou la charge de l'échantillon (1) présente un moment d'inertie aussi faible que possible.

5. Agencement de banc d'essai selon la revendication 4, **caractérisé en ce que** la machine électrique (4) pour l'entraînement et/ou la charge de l'échantillon (1) présente un rapport aussi grand que possible entre le couple de rotation et le moment d'inertie.

6. Agencement de banc d'essai selon la revendication 4 ou 5, **caractérisé en ce que** la machine électrique (4) pour l'entraînement et/ou la charge de l'échantillon (1), en particulier le rotor de celle-ci, est adapté à des charges de couple de rotation élevées, saccadées, à synchronisation angulaire.

7. Agencement de banc d'essai selon l'une des revendications 4 à 6, **caractérisé en ce que** la machine d'entraînement et de charge (4) est conçue comme une machine à courant triphasé, de préférence une machine asynchrone, une machine synchrone à excitation indépendante ou à excitation par aimant permanent.
